# EUROPEAN PATENT SPECIFICATION

(11) **EP 1 461 405 B1**
(45) Date of publication and mention of the grant of the patent: **10.12.2008**
(21) Application number: 02791875.4
(22) Date of filing: 30.12.2002
(51) Int. Cl.: C10M 177/00, B01J 13/02

(54) **METHOD FOR THE PRODUCTION OF A SELF-LUBRICATING POLYMER MATERIAL FOR SEALING ELEMENTS**
VERFAHREN ZUR HERSTELLUNG EINES SELBSTSCHMIERENDEN POLYMERMATERIALS FÜR DICHTUNGSELEMENTE
PROCEDE DE PRODUCTION D'UNE MATIERE POLYMERE AUTOLUBRIFIANTE POUR ELEMENTS D'ETANCHEITE

(30) Priority: 28.12.2001 IT MI20012825
(43) Date of publication of application: 29.09.2004
(73) Proprietor: Nuovo Pignone Holding S.P.A., 50127 Firenze (IT)
(72) Inventor: MAXAM, John, Saratoga Springs, NY 12866 (US); GHASRIPOOR, Farshad, Scotia, NY 12302 (US); AKSIT, Mahmut, Troy, NY 12180 (US)
(74) Representative: Pedder, James Cuthbert
(86) International application number: PCT/EP2002/014849
(87) International publication number: WO 2003/055964

(56) References cited:
- GB-A- 1 525 281
- US-A- 4 056 478
- US-A- 4 325 770
- US-A- 5 112 541
- US-A- 5 902 861

## Description

The present invention relates to a method for the production of a self-lubricating polymer material for sealing elements.

In particular, the present invention relates to a method for producing a polymer material with lubricating microcapsules incorporated into the polymer matrix, which material is suitable for producing sealing elements in reciprocating compressors.

As is known, reciprocating compressors are equipped with a piston which is moved axially within a cylinder in order to compress a gas. Generally, the piston of reciprocating compressors is equipped with annular sealing elements arranged coaxially relative to the axis of the piston and the cylinder and accommodated in a seat formed in the side wall of the piston itself.

These piston sealing rings are subject to wear as they slide along the cylindrical cavity.

With the aim of restricting the wear rate thereof, specific non-metallic materials are used which exhibit sealing properties, ease of handling, a low modulus of elasticity and a coefficient of dynamic friction.

Non-metallic materials which are particularly suitable as constituents of sealing elements are polyetherether ketone (PEEK), polytetrafluoroethylene (PTFE) and polybutadiene-styrene (PBS).

It has, however, been found that sealing elements made from these resins have a tendency to undergo permanent deformation if subjected to stress for extended periods.

In particular, under operating conditions of elevated pressure and temperature, sealing elements of conventional resin not only degrade prematurely, but are also subject to permanent deformation along the dividing line to an extent such as to impair the compression seal.

In order to prevent these disadvantages from occurring, a novel plastics material based on a self-lubricating polymer matrix in which are dispersed microcapsules filled with a lubricating fluid has been developed and is the subject of a copending patent application in the name of Nuovo Pignone.

The polymer matrix of this plastics material is made from a polymer material which is resistant to wear and elevated temperatures, typically a linear aromatic polyketone such as PEEK, which optionally contains fillers or fibres to increase its mechanical strength or thermal conductivity.

The polymer materials on which this novel plastics material are based exhibit elevated softening points and the behaviour thereof is thus little influenced by temperature conditions. The microcapsules incorporated into said base polymers are conventionally produced by means of in situ polymerisation processes, which typically use a shell of polyoxymethylene urea (PMU), or by means of prilling processes. The microcapsule shells are generally made from a material having a relatively low softening temperature. The fluid lubricant incorporated in the microcapsules generally has a low heat capacity.

In order to prevent the lubricating fluid or capsules from burning, low processing temperatures or rapid heating and cooling cycles are used.

However, conventional methods for the production of these polymer materials are not without disadvantages, which primarily occur when low processing temperatures are used.

Occurrence of these disadvantages is primarily attributable to reduced fusion of the pellets during compression moulding operations.

Moreover, it has been found that if, during the production process for these polymer materials, temperatures are raised in order to produce fused or tacky pellets, the polymer deforms or burns.

When conventional production methods are used to produce this novel material, the polymer matrix and microcapsules containing the lubricating fluid segregate during or at the end of the injection moulding phase.

In particular, it has been found when producing said novel plastics material that, during the injection moulding phase, the problem of segregation of the two components (the polymer and the microcapsules containing lubricating fluid) is primarily attributable to the wettability and contamination of the microcapsule shell.

Consequently, use of the novel self-lubricating polymer materials containing microcapsules may currently be restricted by the problems encountered during the production thereof using currently available methods.

One of the general objects of the present invention is to overcome or to limit substantially the occurrence of the disadvantages of the prior art which are encountered in the production of polymer materials incorporating lubricating microcapsules.

Another object of the present invention is to provide a method for producing a polymer material containing lubricating microcapsules which is simple to perform and entails low production costs.

A further object of the invention is to provide a method for producing polymer materials for sealing elements provided with lubricating microcapsules in which the risks of segregation of the polymer phase and the microcapsules are minimised.

It has now surprisingly been found that it is possible to produce a plastics material provided with a polymer matrix with incorporated lubricating microcapsules by pulverising a polymer material by means of cooling to cryogenic temperatures and mixing the pulverised polymer with microcapsules containing a lubricating fluid. When the mixture of pulverised polymer and microcapsules is moulded, a self-lubricating polymer material is obtained which is usable as a base component for sealing elements, such as the compression rings for reciprocating compressor pistons.

In the light of the above-stated and other objects which will emerge more clearly below, a first aspect of the present invention accordingly provides a method for the production of a self-lubricating polymer material comprising the stages:
- cooling a polymer material to cryogenic temperatures, preferably using liquid nitrogen, to yield a crumbly, frozen polymer material,
- crushing said crumbly polymer material to yield an ultrafine polymer powder,
- adding microcapsules containing a lubricating fluid to said ultrafine powder to produce a polymer mixture in which the lubricating microcapsules are dispersed,
- moulding said polymer mixture, advantageously by means of compression or injection moulding.

Polymer materials usable for the purposes of the present invention include polyketones and in particular aromatic polyketones, among which polyetherether ketone (PEEK) is preferred.

For the purposes of the present invention, the phrase "lubricating microparticles containing a lubricating fluid" is intended to mean encapsulated lubricating particles and multiparticles, homogeneous fluids or encapsulated lubricating multilayer materials and in general lubricating agents incorporated in microcapsules.

Lubricating agents usable in the method of the invention are lubricating oils, such as for example organic, natural or synthetic oils.

Particularly suitable oils are lubricating oils which are low in acidity and resistant to elevated temperatures.

According to a preferred embodiment, the lubricating oil incorporated into said microcapsules exhibits viscosity values within the range between 20 and 250 cSt, measured at a temperature of approx. 40°C.

The microcapsules used for the purposes of the present invention may be spherical, symmetrical or irregularly shaped.

According to one embodiment, said microcapsules have an average diameter within the range between 5 and 500 microns, preferably between 20 and 260 microns.

Advantageously, said microcapsules comprise a shell of wax or of a polymer material, preferably polyoxymethylene urea, which is abbreviated as PMU.

The microcapsules may also contain additives to enhance lubricating action.

In particular, it is also possible to include additives to improve sliding between friction surfaces, such as for example microelements such as zinc, boron and mixtures thereof.

According to one embodiment of the invention, the pulverised polymer is mixed with a quantity of lubricating microcapsules of between 1 and 30 wt.%.

The lubricating fluid may be incorporated into said microcapsules using various microencapsulation technologies, such as dry spraying, prilling, coacervation, in situ polymerisation and with soft alginate beads.

The various encapsulation methods for the lubricating fluid are used depending upon the required dimensions of the lubricating particles and upon the ultimate use of the self-lubricating material.

Using the dry spraying process, for example, it is possible to encapsulate the lubricant fluids in capsules of dimensions as small as 5-30 microns.

In the prilling process, which is usually used to produce capsules of dimensions between 1 and 100 microns, the lubricant fluid to be encapsulated is first of all introduced into a molten wax or other polymer matrix, then sprayed into droplets which subsequently solidify on cooling. The microcapsules produced in this manner act as a shell for the lubricant contents. Microcapsules produced by prilling release the lubricant under pressure or, if desired, by selecting polymers with an appropriate melting point, after exposure to a predetermined temperature.

Using coacervation, the lubricating fluid may also be enclosed in microcapsules of a diameter within the range between 25 and approx. 300 microns.

In simple coacervation, the walls of the capsules are typically made from gelatine, polyvinyl alcohol, methylcellulose, polyvinylpyrrolidone and other polymers.

In complex coacervation, the capsule walls are produced using systems based on gelatine-acacia copolymers.

According to a preferred embodiment, the microcapsules are produced by in situ polymerisation which makes it possible to produce a strong polymer shell, preferably of urea-formaldehyde copolymer (PMU), around the drop of lubricating liquid. Encapsulation in a PMU shell is typically an emulsion process, in which an emulsion of the material to be encapsulated is prepared in an aqueous solution.

By way of example, it is also possible to use microcapsules containing lubricant produced using the method described in US patent 5,112,541 for the purposes of performing the method of the present invention.

According to another embodiment of the invention, it is possible to use surface treatments to improve wettability close to the surface of the microcapsules with the aim of minimising segregation phenomena which may occur during the injection moulding phase.

According to another aspect, the present invention provides a method for producing an intermediate of the above-described process, said method comprising the stages:
- providing a base polymer material,
- cooling a said base polymer material to cryogenic temperatures, preferably using liquid nitrogen, to yield a crumbly polymer material,
- pulverising said crumbly polymer material to obtain an ultrafine polymer powder.

The resultant ultrafine polymer powder is an intermediate product which may be used to produce self-lubricating polymer materials by means of moulding.

The features and advantages of the method of the present invention will emerge more clearly from the following description, which is provided by way of non-limiting example, with reference to the attached diagram, in which:

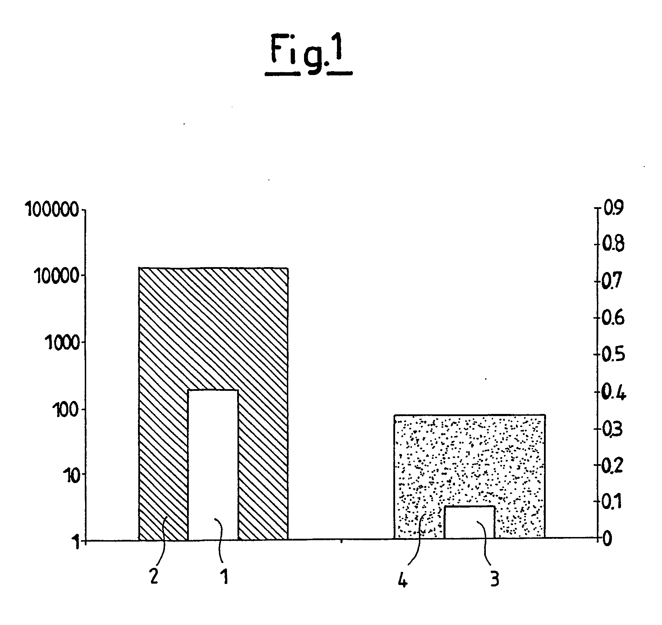

Figure 1 shows four bar charts (1-4) which summarise the results of comparative testing of wear stated in terms of a wear coefficient as factor K (in³min/ft/lb/hr)x10⁹; (shaded column 2 and dotted column 4) and of coefficient of friction, stated in µ (clear columns 1 and 3).
Columns 1-4 show the comparative behaviour data arising from sliding of:
   1) a polymer designated Ultem 1000 (columns 1 and 2), a standard product of General Electric and
   2) a polymer material based on Ultem 1000 with microcapsules incorporated at a rate of 10 wt.% (columns 3 and 4), produced according to one embodiment of the method of the invention (clear columns);
against tempered steel.

The microcapsules incorporated into the Ultem 1000 resin contain a low viscosity oil according to one embodiment of the invention.

The wear tests whose results are summarised in the bar charts were performed under conditions which provide a sliding speed of 300 ft/min (1.524 m/s), a pressure load of 200 psi (13.8 bar) and a test duration of 20 hours "run-in" and 80 hours "steady state".

On the basis of the results from the tests performed, it is clear that the wear rate against steel of the plastic Ultem 1000 incorporating microcapsules produced according to an embodiment of the method of the invention, is reduced by a good three orders of magnitude, while friction is reduced by one order of magnitude, relative to the prior art resin Ultem 1000.

The following Example is provided merely by way of illustration of the present invention and should accordingly not be taken to restrict the scope of protection, which is defined by the attached claims.

### EXAMPLE 1

A PEEK polymer material was dried in a vacuum kiln at a temperature within the range between 65 and 70°C for a period of approx. 8 hours.

Microcapsules containing a lubricating oil, which had previously been produced by means of in situ polymerisation, were added to the polymer powder in a ratio of 10 wt.%.

The mixture of polymer powder and microcapsules was then compression moulded using a closed mould in order to permit uniform heating and pressurisation of the polymer material. The moulded and cooled material was pressurised to values of between 1.5 and 2.5 t to expel air from the mould.

The mould used was placed in a preheated press. The temperature of the press depended upon the melting point of the thermoplastic polymer with reduced load (e.g. 100 kg).

The mould reached approx. 80-90% of the predetermined press temperature before the load was applied.

The load was applied to values of between 250 and 1500 kg with time and load increments for a total period of approx. 10-15 minutes. The final load was maintained while the mould was allowed to cool to ambient temperature.

## Claims

1. A method for the production of a self-lubricating polymer material comprising a polymer matrix with incorporated microcapsules containing a lubricant, said method comprising the stages
cooling a polymer material to cryogenic temperatures to yield a crumbly, frozen polymer material,
comminuting said crumbly polymer material to yield an ultrafine polymer powder,
adding microcapsules containing a lubricating fluid to said ultrafine powder to produce a polymer mixture containing the lubricating microcapsules, and
moulding the polymer mixture comprising the microcapsules.

2. A method according to claim 1, **characterised in that** the cooling phase is performed by means of liquid nitrogen.

3. A method according to claim 1 or 2, **characterised in that** said moulding phase proceeds by means of compression.

4. A method according to any one of the preceding claims 1-3, **characterised in that** said polymer material comprises a polyketone.

5. A method according to claim 4, **characterised in that** said polyketone is of the aromatic type.

6. A method according to claim 4 or 5, **characterised in that** said polyketone is PEEK.

## Patentansprüche

1. Verfahren zum Produzieren eines selbst schmierenden Polymermaterials, umfassend eine Polymermatrix mit eingelagerten Mikrokapseln, die ein Schniermittel enthalten, wobei das Verfahren die Stufen umfasst
Abkühlen eines Polymermaterials auf kryogene Temperaturen, um ein krümeliges gefrorenes Polymermaterial zu ergeben,
Zerkleinern des krümeligen Polymermaterials, um ein ultrafeines Polymerpulver zu ergeben,
Hinzugeben von Mikrokapseln, die eine schmierende Flüssigkeit enthalten, zu dem ultrafeinen Pulver, um eine Polymermischung zu produzieren, die die schmierenden Mikrokapseln enthält, und
Formen der die Mikrokapseln umfassenden Polymermischung.

2. Verfahren nach Anspruch 1, **dadurch gekennzeichnet, dass** die Kühlphase mittels flüssigem Stickstoff ausgeführt wird.

3. Verfahren nach Anspruch 1 oder 2, **dadurch gekennzeichnet, dass** die Formphase mittels Kompression erfolgt.

4. Verfahren nach einem der vorhergehenden Ansprüche 1 bis 3, **dadurch gekennzeichnet, dass** das Polymermaterial ein Polyketon umfasst.

5. Verfahren nach Anspruch 4, **dadurch gekennzeichnet, dass** das Polyketon vom aromatischen Typ ist.

6. Verfahren nach Anspruch 4 oder 5, **dadurch gekennzeichnet, dass** das Polyketon Polyetheretherketon (PEEK) ist.

## Revendications

1. Procédé pour la production d'une matière polymère autolubrifiante comprenant une matrice polymérique avec des microcapsules incorporées contenant un lubrifiant, ledit procédé comprenant les étapes consistant à :
refroidir une matière polymère à des températures cryogéniques pour produire une matière polymère friable, gelée,
fragmenter ladite matière polymère friable pour produire une poudre polymère ultrafine,
ajouter des microcapsules contenant un fluide lubrifiant à ladite poudre ultrafine pour produire un mélange polymère contenant les microcapsules lubrifiantes, et
mouler le mélange polymère comprenant les microcapsules.

2. Procédé selon la revendication 1, **caractérisé en ce que** la phase de refroidissement est exécutée au moyen d'azote liquide.

3. Procédé selon la revendication 1 ou la revendication 2, **caractérisé en ce que** ladite phase de moulage se poursuit par compression.

4. Procédé selon l'une quelconque des revendications précédentes 1 à 3, **caractérisé en ce que** ladite matière polymère comprend un polycétone.

5. Procédé selon la revendication 4, **caractérisé en ce que** ledit polycétone est du type aromatique.

6. Procédé selon la revendication 4 ou la revendication 5, **caractérisé en ce que** ledit polycétone est un polyéther éther cétone (PEEK).
